# EUROPÄISCHE PATENTSCHRIFT

(11) **EP 1 132 830 B1**
(45) Veröffentlichungstag und Bekanntmachung des Hinweises auf die Patenterteilung: **02.01.2003**
(21) Anmeldenummer: 01250019.5
(22) Anmeldetag: 15.01.2001
(51) Int. Cl.: G06F 15/02

(54) **Währungsumrechner**
Currency converter
Convertisseur de devises

(30) Priorität: 14.01.2000 DE 10002888; 19.10.2000 DE 10052986
(43) Veröffentlichungstag der Anmeldung: 12.09.2001
(73) Patentinhaber: Fimor S.A., 72058 Le Mans, Cedex 2 (FR); Zuckermann, Alex, 72550 La Quinte (FR)
(72) Erfinder: Zuckermann, Alex, 72550 La Quinte (FR)
(74) Vertreter: Eisenführ, Speiser & Partner

(56) Entgegenhaltungen:
- DE-U- 29 716 179
- DE-U- 29 819 312
- DE-U- 29 908 948
- NL-C- 1 006 158

## Beschreibung

Die Erfindung betrifft eine Vorrichtung zur Währungsumrechnung von einer ersten Währung in eine zweite Währung und umgekehrt, mit einer Eingabeeinheit, einer damit verbundenen Verarbeitungseinheit, einer mit der Verarbeitungseinheit verbundenen Ausgabeeinheit und mit mindestens einem mit der Verarbeitungseinheit verbundenen ersten Auswahlelement zur Bestimmung einer Eingabewährung, wobei die Verarbeitungseinheit zur Durchführung der Umrechnung eines eingegebenen Währungsbetrages, zur Durchführung von Grundrechenoperationen mit Eingabebeträgen sowie zur Steuerung der Ausgabe auf der Ausgabeeinheit ausgebildet ist und die Ausgabeeinheit wenigstens einen ersten Ausgabebereich mit zwei Ausgabezeilen zur im wesentlichen gleichzeitigen Ausgabe eines eingegebenen und eines umgerechneten Währungsbetrages aufweist.

Nach der Umstellung der nationalen Währungen in den Ländern der europäischen Währungsunion wird es über eine gewisse Zeitspanne möglich sein, sowohl mit nationaler Währung als auch mit der Währung Euro zu zahlen. Wechselgeld sollzwar allein in Euro herausgegeben werden, es wird sich jedoch in der Praxis nicht verhindern lassen, dass für einen gewissen Zeitraum das Rückgeld in beiden Währungen ausgegeben werden muss. Hierbei wird es für jedermann im Alltag häufig erforderlich sein, Währungsbeträge sowohl in die jeweils andere Währung umzurechnen als auch mit einander zu addieren oder voneinander zu subtrahieren. Auch andere einfache Grundrechenoperationen wie Division und Multiplikation müssen mit Währungsbeträgen durchgeführt werden.

Es sind bereits viele verschiedene Rechner auf dem Markt, die neben den vier Grundrechenarten eine Umrechnung von Währungsbeträgen zwischen einer nationalen Währung und dem Euro anbieten. So beschreibt die Druckschrift DE 298 09 712 U1 einen Währungsrechner, bei dem eingegebene Währungsbeträge zugleich in Euro und in einer nationalen Währung angezeigt werden können. Auch verfügt dieser bekannte Währungsrechner über die Grundrechenfunktionen Addition, Subtraktion, Multiplikation und Division. Jedoch können diese Rechenoperationen stets nur in einer Währung durchgeführt werden. Damit ist es jedoch einem Verkäufer nicht auf einfache Weise möglich, beispielsweise das Wechselgeld in Euro zu berechnen, wenn ein Kunde in nationaler Währung und nicht passend bezahlt hat und Wechselgeld in Euro bzw. in Euro und nationaler Währung erhalten soll. Der Verkäufer muß in einer solchen Situation zuerst den bezahlten Betrag in Euro umrechnen und dann die Differenz zwischen dem Kaufpreis und dem umgerechneten Betrag bilden.

Der vorliegenden Erfindung liegt daher die Aufgabe zu Grunde, eine Vorrichtung zur Währungsumrechnung der eingangs genannten Art so weiterzubilden, dass sie die genannten Nachteile nicht aufweist.

Diese Aufgabe wird ausgehend von einer Vorrichtung gemäß dem Oberbegriff des Anspruchs 1 durch die im kennzeichnenden Teil des Anspruchs 1 angegebenen Merkmale gelöst.

Erfindungsgemäß ist die Verarbeitungseinheit zur Durchführung der Grundrechenoperationen mit Eingabebeträgen gleicher oder unterschiedlicher Währungen ausgebildet. Das heißt im einzelnen, es kann durch Betätigung des ersten Auswahlelementes zunächst eine (erste) Eingabewährung bestimmt werden, dann ein Betrag in der ersten Währung eingegeben und die durchzuführende Grundrechenoperation bestimmt werden. Wurde die Addition oder Subtraktion ausgewählt, kann anschließend durch erneute Betätigung des ersten Auswahlelementes die Eingabewährung gewechselt und anschließend ein Betrag in der zweiten Währung eingegeben werden. Die Verarbeitungseinheit, die unter anderem die Funktionen einer einfachen Recheneinheit umfasst, rechnet vorzugsweise mit jedem Eingabeschritt die eingegebenen Beträge in die jeweils andere Währung um und zeigt sie in der jeweils zugeordneten Anzeigezeile an. Es kann zum Auslösen dieser Umrechnung jedoch auch ein gesondertes Betätigungselement vorgesehenen sein. Die Durchführung der Grundrechenoperation wird durch Betätigen eines beispielsweise mit " = " beschrifteten Auslöseelements gestartet. Das Ergebnis der Rechnung wird in beiden Währungen in der jeweils zugeordneten Anzeigezeile dargestellt.

Umgangssprachlich formuliert können mit Hilfe der erfindungsgemäßen Vorrichtung also "Äpfel und Birnen" addiert oder subtrahiert werden. Dies ist insbesondere von Vorteil, wenn zwei Währungen nebeneinander gebräuchlich sind.

Die Durchführung der Grundrechenarten kann dabei in der Verarbeitungseinheit so organisiert sein, dass eine Verrechnungswährung festgelegt ist, in der die Verrechnung erfolgt. Erfolgt eine Eingabe in einer anderen Währung als dieser festgelegten Verrechnungswährung, erfolgt dann automatisch vor der Verrechnung nach den Grundrechenarten zunächst eine Umrechnung dieser Eingabe in die Verrechnungswährung. Das Ergebnis der Grundrechenoperationen wird somit zunächst in der Verrechnungswährung ermittelt und dann wieder zur parallelen Ausgabe in beiden Währungen in die andere Währung umgerechnet.

Ebenso kann eine feste Voreinstellung der Verrechnungswährung auch fehlen. Vielmehr kann vorgesehen sein, dass die Verrechnungswährung diejenige Währung ist, in der zu einem bestimmten Zeitpunkt eine bestimmte Eingabe erfolgte. Beispielsweise kann die Verrechnungswährung diejenige Währung sein, in der nach dem Einschalten oder Rücksetzen der Vorrichtung zuerst eine Eingabe erfolgte.

Weiterhin ist eine Rückgeldfunktion zur Eingabe eines Rechnungsbetrages in einem ersten Funktionsschritt und eines Zahlungsbetrages in einem zweiten Funktionsschritt sowie zur Ausgabe des die Differenz des Rechnungsbetrages und des Zahlungsbetrages darstellenden Rückgeldbetrages in einem dritten Funktionsschritt in beiden Währungen auf dem ersten Ausgabebereich vorgesehen. Hierdurch ist es für den Benutzer der Vorrichtung in vorteilhafter Weise möglich, sich ohne große Überlegungen in Situationen, in denen er beispielsweise an einer Kasse steht, schnell einen Überblick darüber zu verschaffen, was er an Rückgeld zu erhalten hat. Er muss lediglich den zu zahlenden Rechnungsbetrag und den von ihm gezahlten Zahlungsbetrag eingeben und erhält, gegebenenfalls automatisch, eine Information über den Rückgeldbetrag.

Hierbei ist weiter vorzugsweise vorgesehen, dass in jedem Funktionsschritt der eingegebene bzw. errechnete Wert in beiden Währungen in der oben beschriebenen Weise parallel auf der Ausgabeeinheit ausgegeben wird. Es kann jedoch auch genügen, dass nur der Rückgeldbetrag in beiden Währungen ausgegeben wird.

Die Verarbeitungseinheit kann so ausgebildet sein, dass die Funktionsschritte automatisch in einer festen Reihenfolge aufeinander folgen. So kann beispielsweise vorgesehen sein, dass jede Eingabe in einem Funktionsschritt durch Betätigen eines entsprechenden Betätigungselementes abgeschlossen wird und dann automatisch zum nächstfolgenden Funktionsschritt übergegangen wird.

Vorzugsweise ist vorgesehen, dass zwischen den Funktionsschritten beliebig gewechselt werden kann. Hierzu ist bevorzugt wenigstens ein mit der Verarbeitungseinheit verbundenes zweites Auswahlelement zur freien Auswahl des Funktionsschrittes vorgesehen. Hierdurch ist es möglich, Korrekturen oder Ergänzungen in den einzelnen Funktionsschritten vorzunehmen. Bei dem zweiten Auswahlelement kann es sich beispielsweise um eine oder mehrere Cursortasten handeln, durch deren Betätigung jeweils zum nächsten bzw. vorhergehenden Funktionsschritt gewechselt werden kann. Ebenso ist es möglich, für jeden Funktionsschritt eine gesonderte, vorzugsweise entsprechend gekennzeichnete Taste vorzusehen.

Bei besonders günstigen Weiterbildungen der erfindungsgemäßen Vorrichtung ist hierbei vorgesehen, dass zumindest beim Wechsel in den entsprechenden Funktionsschritt der zuletzt in diesem Funktionsschritt eingegebene Wert auf der Ausgabeeinheit ausgegeben wird. Diese Ausgabe erfolgt vorzugsweise wieder in beiden Währungen. Hierdurch ist es in einfacher Weise möglich, vorherige Eingaben nochmals auf ihre Richtigkeit hin zu überprüfen.

Die Ausgabeeinheit kann so ausgestaltet sein, dass sie lediglich einen ersten Ausgabebereich mit zwei Ausgabezeilen umfasst. Beim Wechsel zwischen den Funktionsschritten wird dann in dem ersten Ausgabebereich jeweils der dem Funktionsschritt entsprechende Wert ausgegeben. Dies geschieht vorzugsweise wiederum in beiden Währungen.

Um dem Benutzer die Zuordnung der ausgegebenen Werte zu den Funktionsschritten zu erleichtern, ist bei bevorzugten Varianten der erfindungsgemäßen Vorrichtung vorgesehen, dass die Ausgabeeinheit ein Ausgabefeld zur Ausgabe einer den zuletzt gewählten Funktionsschritt kennzeichnenden Information umfasst. Mit anderen Worten wird dem Benutzer in dem Ausgabefeld angezeigt, in welchem Funktionsschritt er sich gerade befindet. Bevorzugt ist das Ausgabefeld dem ersten Ausgabebereich zugeordnet, um die Nutzung der Vorrichtung so angenehm wie möglich zu gestalten. Eine weitere Erleichterung der Benutzung ergibt sich bei bevorzugten Varianten, bei denen im Ausgabebereich im Bereich derjenigen Ausgabezeile, die der zuletzt ausgewählten Eingabewährung entspricht, ein erstes Aktivierungssymbol ausgegeben wird, so dass der Benutzer ohne weiteres erkennen kann in welcher Währung die Eingabe erfolgt. Hierbei kann das erste Aktivierungssymbol beispielsweise dem Währungskürzel oder Währungssymbol entsprechen. Es kann beispielsweise permanent ausgegeben werden. Es kann aber auch blinken oder dergleichen, um die Aufmerksamkeit des Benutzers zu erregen.

Bei anderen Varianten der erfindungsgemäßen Vorrichtung ist vorgesehen, dass die Ausgabeeinheit einen zweiten Ausgabebereich mit zwei Ausgabezeilen zur Ausgabe des Rechnungsbetrages und einen dritten Ausgabebereich mit zwei Ausgabezeilen zur Ausgabe des Zahlungsbetrages umfasst. Hierbei kann der Benutzer dann problemlos gleichzeitig die Eingaben in dem ersten und zweiten Funktionsschritt sowie die Ausgabe im dritten Funktionsschritt einsehen und überprüfen. Auch hierbei erfolgt die Ausgabe der den Funktionsschritten zugeordneten Werte wiederum vorzugsweise in beiden Währungen.

Hierbei ist weiterhin vorzugsweise vorgesehen, dass die Verarbeitungseinheit und die Ausgabeeinheit derart ausgebildet sind, dass ein zweites Aktivierungssymbol ausgegeben wird, welches demjenigen Ausgabebereich zugeordnet ist, der wiederum dem zuletzt ausgewählten Funktionsschritt zugeordnet ist. Hierbei kann es sich beispielsweise um einen Pfeil oder ein ähnliches Symbol handeln. Es kann permanent ausgegeben werden oder beispielsweise auch blinken. Weiterhin ist dieses zweite Aktivierungssymbol nach Art des oben beschriebenen ersten Aktivierungssymbols bevorzugt derjenigen Ausgabezeile zugeordnet, die der zuletzt ausgewählten Währung entspricht.

Um dem Benutzer wiederum die Zuordnung zu den Funktionsschritten zu erleichtern. ist bei bevorzugten Varianten der erfindungsgemäßen Vorrichtung vorgesehen, dass den Ausgabebereichen jeweils eine den zugehörigen Funktionsschritten entsprechende Kennzeichnung zugeordnet ist. Hierbei kann es sich beispielsweise um eine entsprechende feste Beschriftung handeln. Es können jedoch auch Varianten vorgesehen sein, bei denen der Benutzer der entsprechende Eingaben die Zuordnung der einzelnen Ausgabebereiche zu den jeweiligen Funktionsschritten selbst vornehmen kann. Hierbei kann dann wiederum jedem Ausgabebereich ein Ausgabefeld zugeordnet sein, auf dem dann eine der vorgenommenen Zuordnung zu den jeweiligen Funktionsschritt entsprechende Kennzeichnung ausgegeben wird.

Bei besonders vorteilhaften Varianten der erfindungsgemäßen Vorrichtung ist die Verarbeitungseinheit zur Durchführung der Grundrechenoperationen wenigstens während des ersten Funktionsschrittes ausgebildet. Vorzugsweise ist sie zur zusätzlichen wahlweisen Durchführung der Grundrechenoperationen mit unterschiedlichen Währungen wenigstens während dieses ersten Funktionsschrittes ausgebildet. Die Durchführung der Grundrechenoperationen, insbesondere mit Beträgen in unterschiedlichen Währungen, kann dabei in der oben beschriebenen Weise erfolgen. Hierdurch können in einfacher Weise einzelne Beträge, gegebenenfalls auch in unterschiedlichen Währungen miteinander verrechnet werden, um die gesamte zu bezahlende Summe, d. h. den Rechnungsbetrag zu ermitteln. Bevorzugt stehen die Grundrechenoperationen auch während der anderen Funktionsschritte zur Verfügung. Somit ist es dann beispielsweise möglich, dass in unterschiedlichen Währungen gezahlte Beträge während des zweiten Funktionsschrittes erfasst werden. Ebenso kann im dritten Funktionsschritt ein in einer Währung bereits ausgezahlter Betrag durch einfache Subtraktion erfasst werden, um den noch verbleibenden rückzuzahlenden Betrag, gegebenenfalls in beiden Währungen, zu ermitteln.

Bei einer bevorzugten Ausführungsform der Erfindung sind die zur Umrechnung der Währung erforderlichen Konstanten als Festwerte in einem mit der Verarbeitungseinheit verbundenen Speicher abgelegt. Die Konstanten werden also herstellerseits festgelegt und können nachträglich nicht verändert werden. Dadurch ist die Zuverlässigkeit der Funktion der Vorrichtung garantierbar. Insbesondere können die gesetzlich festgelegten Umrechnungskonstanten zwischen der Währung Euro und einer jeweiligen Landeswährung eingespeichert werden. In der Regel werden zwei zueinander reziproke Umrechnungsfaktoren eingespeichert sein, auf die je nach Umrechnungsrichtung zugegriffen wird. Die Verarbeitungseinheit kann *aber* auch lediglich eine Umrechnungskonstante verwenden und je nach Umrechnungsrichtung eine Multiplikation oder Division durchführen.

Zur Vereinfachung der Bedienung können zwei erste Auswahlelemente vorgesehen sein. Jedes erste Auswahlelement ist dabei einer Anzeigezeile zugeordnet, wobei die Verarbeitungseinheit dann zur ausschließlichen Ausgabe von Beträgen in der durch das zugeordnete erste Auswahlelement auswählbaren Währung in der jeweiligen Anzeigezeile ausgebildet ist. Dadurch wird vermieden, dass der Benutzer die Orientierung darüber verliert, welche Währung in welcher Zeile angezeigt ist. Einem intuitiven Gebrauch entgegenkommend können die Auswahlelemente neben der jeweils zugeordneten Anzeigezeile angeordnet werden.

Vorzugsweise ist die Verarbeitungseinheit zur Währungsumrechnung Eingabeschritt für Eingabeschritt und und zur Ausgabe des Ergebnisses der Umrechung Eingabeschritt für Eingabeschritt in der zugeordneten Anzeigezeile ausgebildet. Ein Betrag wird Ziffer um Ziffer eingegeben. Ein Eingabeschritt besteht dabei im Drücken derjenigen Zifferntaste, die der gerade einzugebenden Stelle des Betrages entspricht. Auch ein noch nicht vollständig eingegebener Betrag wird also sofort umgerechnet und das Ergebnis der Umrechnung wird in der jeweils anderen Anzeigezeile dargestellt. Mit jeder eingegebenen Ziffer wächst somit der in beiden Anzeigen dargestellte Betrag. Auf diese Weise wird zum einen ein besonderes Auslöseelement zum Start der Umrechnung eingespart. Zum anderen erleichtert auch diese Maßnahme eine intuitive Benutzung der Vorrichtung, weil stets die Geldbeträge der beiden Währungen gegenübergestellt sind.

Bei bevorzugten Varianten der vorliegenden Erfindung ist unabhängig von der Art der Umrechnung die Verarbeitungseinheit zur im wesentlichen gleichzeitigen Ausgabe des in die andere Währung umgerechneten Betrages bei Eingabe eines Betrages in der einen Währung ausgebildet. Ist mit anderen Worten eine Eingabe eines Betrages in der einen Währung, beispielsweise durch Betätigung eines entsprechenden Betätigungselements abgeschlossen, so erscheint mit gegebenenfalls geringer Verzögerung sofort auch die Ausgabe des umgerechneten Betrages.

Vorzugsweise ist die Verarbeitungseinheit zur im wesentlichen gleichzeitigen Ausgabe des Rechenergebnisses in beiden Währungen bei Verrechnung zweiter Beträge unterschiedlicher oder gleicher Währung ausgebildet.

Eine Ausführungsform der Erfindung sieht die Umrechnung zwischen der Währung Euro und genau einer nationalen Währung eines Mitgliedsstaates der europäischen Währungsunion vor. Ein solches Gerät ist besonders übersichtlich, weil dem Benutzer nicht die oft verwirrende Auswahl zwischen verschiedenen Eingabewährungen auferlegt wird. Dieser Währungsrechner eignet sich für alle alltäglichen Situationen, in denen in einem bestimmten Land der Währungsunion Geldbeträge zwischen der nationalen Währung und dem Euro umgerechnet werden müssen.

Bei einer anderen Variante der erfindungsgemäßen Vorrichtung ist die Verarbeitungseinheit zur Umrechnung zwischen der ersten Währung und einer Anzahl zweiter Währungen ausgebildet, wobei ein mit der Verarbeitungseinheit verbundenes Währungsauswahlelement zur Auswahl der zweiten Währung vorgesehen ist. Beispielsweise ist hiermit die Umrechnung zwischen der Währung Euro und allen nationalen Währungen der Mitgliedsstaaten der europäischen Währungsunion durchführbar und es kann durch Betätigung des Währungsauswahlelementes eine nationale Währung zur Umrechnung ausgewählt werden. Diese Ausführungsform eignet sich insbesondere für Personen, die häufig in andere Mitgliedsstaaten der Währungsunion reisen.

Die Vorrichtung wird in einer Variante als Taschenrechner im Scheckkartenformat ausgebildet. Dadurch kann sie bequem in der Hosen- oder Jackentasche mitgeführt werden und ist jederzeit verfügbar.

Eine andere Variante der Erfindung dient insbesondere zur Verwendung an Verkaufsständen, etwa auf Märkten. Dieser Währungsumrechner hat etwa die Größe eines Tischrechners und weist eine besonders große und robuste Eingabeeinheit auf. Die Anzeigeeinheit ist so gestaltet, dass sowohl ein Kunde als auch der Verkäufer die angezeigten Beträge bequem erkennen können. Beispielsweise sind zwei Anzeigen vorgesehen, von denen eine dem Kunden und die andere dem Verkäufer zugewandt ist. Die dem Kunden zugewandte Anzeige kann auch lösbar an der Vorrichtung befestigt und separat aufstellbar sein. Dabei erfolgt die Signalübertragung zur Steuerung der Anzeige beispielsweise durch ein Kabel oder drahtlos unter Verwendung eines bekannten Übertragungsstandards, beispielsweise über Infrarot-Übertragungsstandards (IrDA), Bluetooth oder dergleichen.

Schließlich ist in Weiterführung der letztgenannten Ausführungsform auch eine handelsübliche Registrierkasse um die erfindungsgemäßen Merkmale erweiterbar. Vorzugsweise werden die oben dargestellten, durch die Erfindung realisierten Funktionsmerkmale bei einer solchen Kasse lediglich optional zur Verfügung stehen, weil sie nur während einer Umgewöhnungsphase unmittelbar nach der Umstellung von nationalen Währungen auf den Euro benötigt werden.

Weitere bevorzugte Ausgestaltungen der vorliegenden Erfindung ergeben sich aus den Unteransprüchen und der nachstehenden Beschreibung bevorzugter Varianten des erfindungsgemäßen Stents unter Bezugnahme auf die beigefügten Zeichnungen. Es zeigen:
- Figur 1: ein bevorzugtes Ausführungsbeispiel der erfindungsgemäßen Vorrichtung in Draufsicht;
- Figur 2: ein Blockschaltbild der Ausführung aus Figur 1;
- Figur 3: ein weiteres bevorzugtes Ausführungsbeispiel der erfindungsgemäßen Vorrichtung in Draufsicht;
- Figur 4: ein Blockschaltbild der Ausführung aus Figur 3;
- Figur 5: ein anderes bevorzugtes Ausführungsbeispiel der erfindungsgemäβen Vorrichtung in Draufsicht;
- Figur 6: eine perspektivische Ansicht einer weiteren bevorzugten Ausführungsform der erfindungsgemäßen Vorrichtung;
- Figur 7: ein Blockschaltbild der Ausführung aus Figur 6.
- Figur 8: eine alternative Ausführungsform

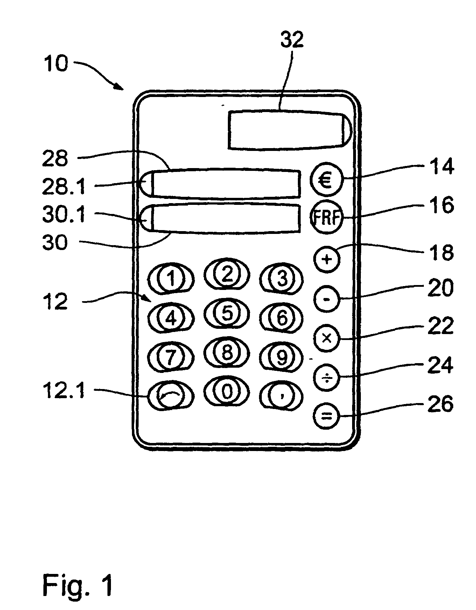

Der in der Figur 1 dargestellte Währungsrechner 10 hat in etwa die Seitenmaße einer Scheckkarte. Eine Eingabeeinheit 12 umfasst die Zifferntasten 0 bis 9, eine Taste für das Dezimaltrennzeichen (hier mit "," gekennzeichnet) sowie eine mit einem Pfeil gekennzeichnete Taste 12.1 zur Löschung der vorangegangenen Eingabe. Zum rechten Rand des Rechners hin sind zwei erste Auswahltasten 14 und 16 untereinander angeordnet. Parallel zur Längsseite des Rechners schließen sich zur Schmalseite hin Funktionstasten 18 bis 24 für die vier Grundrechenarten Addition ("+"), Subtraktion ("-"), Multiplikation ("X") und Division (".") an. Unterhalb der Divisionstaste 24 ist eine mit " = " gekennzeichnete Auslösetaste 26 vorgesehen.

Zwei LCD-Anzeigezeilen 28 und 30 sind oberhalb der Eingabeeinheit 12 angeordnet. Sie verlaufen parallel zur Schmalseite etwa vom linken Rand des Rechners 10 bis zu den Auswahlelementen 14 und 16. Durch diese Anordnung der Anzeigezeilen 28 und 30 in einer Linie mit den Auswahlelementen 14 und 16 ist die Zuordnung der Währungen zu den Anzeigezeilen eindeutig. In der Anzeigezeile 28 werden stets Beträge in Euro und in der Anzeigezeile 30 stets Beträge in der nationalen Währung, hier in Französischen Francs, angezeigt. Die Anzeigezeilen sind jeweils 8-stellig und können zusätzlich zwei Dezimalstellen anzeigen. Es können aber auch Währungen mit weniger als zwei Dezimalstellen (wie die etwa Italienische Lira, die Spanische Peseta, der Portugiesische Escudo) dargestellt werden. Zusätzlich, alternativ unter Verringerung der Anzeige um zwei Ziffernstellen, ist in jeder LCD-Anzeigezeile ein Minuszeichen und ein erstes Aktivierungssymbol darstellbar. Das erste Aktivierungssymbol wird dargestellt oder blinkt nur in derjenigen Anzeigezeile, die der augenblicklich ausgewählten Eingabewährung zugeordnet ist. Das Aktivierungssymbol wird den Ziffernstellen im Bereich 28.1 beziehungsweise 30.1 dargestellt. Es versteht sich, dass es bei anderen Varianten alternativ auch oberhalb oder unterhalb der Ziffernstellen angezeigt werden kann. Es können zur weiteren Verdeutlichung auch unterschiedliche Aktivierungssymbole in den beiden Ausgabezeilen vorgesehen sein.

Eine Solarzelle 32 dient der Energieversorgung des Währungsrechners.

Im folgenden wird die Funktionsweise des Währungsrechners 10 im einzelnen erläutert.

Der Währungsrechner 10 wird durch Betätigung einer der ersten Auswahltasten 14 oder 16 eingeschaltet. Damit erfolgt gleichzeitig die Auswahl der einzugebenden Währung. Wird also bei ausgeschaltetem Rechner 10 beispielsweise die Eurotaste 14 betätigt, so erscheint in der Anzeigezeile 28 das erste Aktivierungssymbol und eine 0.

Anschließend erfolgt eine Eingabe eines Währungsbetrages in Euro. Nach jedem Eingabeschritt erscheint in der Anzeigezeile 30 unmittelbar der dem bislang eingegebenen Betrag in Euro entsprechende, umgerechnete Betrag in Französischen Francs.

Soll eine neue Eingabe gemacht werden, so wird die Pfeiltaste 12.1 im Eingabefeld 12 gedrückt. Anschließend erscheint in beiden Anzeigezeilen 28 und 30 eine "0", in der Anzeigezeile 28 jedoch zusätzlich das Aktivierungssymbol.

Soll eine neue Eingabe für eine Umrechung in entgegengesetzter Richtung erfolgen, so wird die Auswahltaste 16 betätigt. Es erscheint in der Anzeigezeile 30 das Aktivierungssymbol und eine "0", während der Inhalt Anzeigezeile 28 vollständig gelöscht wird. Der weitere Verlauf der Eingabe und Umrechnung entspricht dem zuvor dargestellten.

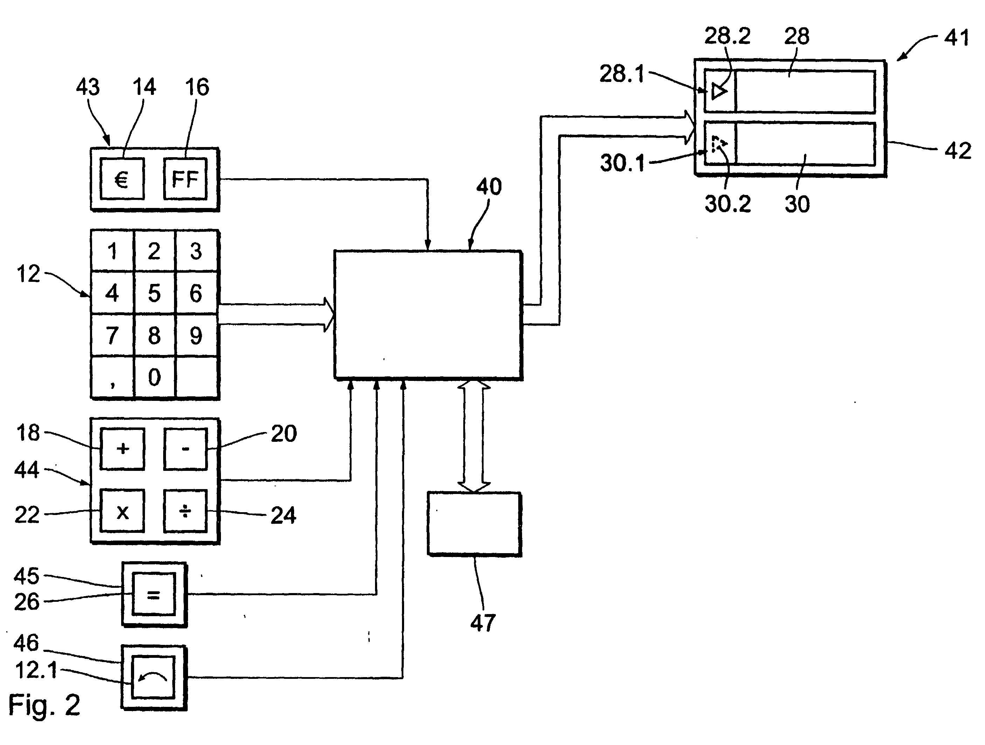

Figur 2 zeigt ein Blockschaltbild der Vorrichtung aus Figur 1 mit der Eingabeeinheit 12, der damit verbundenen Verarbeitungseinheit 40 und der mit der Verarbeitung 40 verbundenen Ausgabeeinheit 41 mit dem ersten Anzeigebereich 42. Dieser erste Anzeigebereich 42 umfasst die beiden LCD-Anzeigezeilen 28 und 30, die wiederum Bereiche 28.1 bzw. 30.1 zur Darstellung eines Aktivierungssymbols 28.2 bzw. 30.2 in Form eines Pfeiles aufweisen.

Eine mit der Verarbeitungseinheit 40 verbundene erste Auswahleinrichtung 43 umfasst die beiden ersten Auswahlelemente 14 und 16 zur Bestimmung der Eingabewährung. Eine ebenfalls mit der Verarbeitungseinheit 40 verbundene Funktionstasteneinheit 44 umfasst die Funktionstasten 18 bis 24 für die Grundrechenarten. Eine mit der Verarbeitungseinheit 40 verbundene Auslöseeinheit 45 umfasst die Auslösetaste 26. Eine ebenfalls mit der Verarbeitungseinheit 40 verbundene Löscheinheit 46 umfasst die Löschtaste 12.1. Weiterhin ist ein mit der Verarbeitungseinheit 40 verbundener Speicher 47 vorgesehen, in dem die Umrechnungskonstante für die Umrechnung zwischen den Währungen abgelegt ist.

Die Verarbeitungseinheit 40 ist zum einen zur Durchführung der oben beschriebenen Umrechnung eines eingegebenen Währungsbetrages sowie zur Steuerung der Ausgabe auf der Ausgabeeinheit 41 ausgebildet. Weiterhin ist sie zur Durchführung von Grundrechenoperationen mit Eingabebeträgen ausgebildet.

Die Verbindung der bisher dargestellten Umrechnungsfunktion mit den Grundrechenfunktionen wird im folgenden anhand von Beispielen erläutert. Die Beispiele sind in Tabellenform dargestellt. In den Zeilen der Tabellen sind von oben nach unten aufeinanderfolgende Ereignisse enthalten. Die linke, mit "Eingabe" gekennzeichnete Spalte gibt an, welche Taste oder Tastenkombination betätigt wird. Dabei ist die Eingabe von Zahlen der Einfachheit halber in einer Zeile dargestellt. Es versteht sich, dass die Währungsumrechnung, wie oben dargestellt, stets simultan mit der Eingabe der einzelnen Ziffern erfolgt. Die mittlere Spalte "EURO-Anzeige" ist in sich zweigeteilt. In der linken Teilspalte ist angegeben, ob bei dem in der Eingabespalte dargestellten Eingabeschritt die Anzeigezeile 28 das Aktivierungssymbol darstellt oder nicht. Ist es der Fall, so wird dies durch die Abkürzung "Akt" gekennzeichnet. Das Aktivierungssymbol kennzeichnet also stets die für die Eingabe ausgewählte Währung und ist immer der der ausgewählten Währung entsprechenden Anzeigezeile 28 oder 30 zugeordnet. Die rechte Teilspalte gibt die in der Anzeigezeile 30 dargestellte Zahl wieder. Die rechte Spalte "FRF-Anzeige" gibt in analoger Weise den Inhalt der Anzeigezeile 30 wieder. Auch hier dient die linke Teilspalte zur Kennzeichnung des angezeigten Aktivierungssymbols und die rechte Teilspalte zur Wiedergabe des angezeigten Betrages. Ein leeres Feld bedeutet, dass nichts angezeigt wird.

### Beispiel 1:

Es sollen zwei in Euro eingegebene Beträge addiert werden:
1000 EURO + 100 EURO 1100 EURO = 7215,53 FRF

| Eingabe | EURO Anzeige | | FRF Anzeige | |
|---|---|---|---|---|
| EURO | Akt | 0 | | |
| 1000 | Akt | 1000 | | 6559,57 |
| + | Akt | 0 | | 0 |
| 100 | Akt | 100 | | 655,96 |
| = | Akt | 1100,00 | | 7215,53 |

Die Summanden werden sofort bei der Eingabe umgerechnet. Die Summe wird sowohl in Euro als auch in Französischen Francs angezeigt.

### Beispiel 2

Es sollen zwei in Euro eingegebene Beträge subtrahiert werden.
1000 EURO - 1200 EURO = -200 EURO = -1311,91 FRF

| Eingabe | EURO Anzeige | | FRF Anzeige | |
|---|---|---|---|---|
| EURO | Akt | 0 | | |
| 1000 | Akt | 1000 | | 6559,57 |
| - | Akt | 0 | | 0 |
| 1200 | Akt | 1200 | | 7871,48 |
| = | Akt | -200,00 | | -1311,91 |

Dieses Beispiel entspricht der Umrechnung von Wechselgeld. Statt eines Betrages von 1000 Euro werden 1200 Euro bezahlt. Der herauszugebende Betrag wird sowohl in Euro als auch in der nationalen Währung angezeigt.

### Beispiel 3:

Es sollen zwei in nationaler Währung eingegebene Beträge addiert werden.
486,52 FRF + 200,56 FRF = 687,08 FRF = 104,74 EURO

| Eingabe | EURO Anzeige | | FRF Anzeige | |
|---|---|---|---|---|
| FRF | | | Akt | 0 |
| 486,52 | | 74,14 | Akt | 486,52 |
| + | | 0 | Akt | 0 |
| 200,56 | | 30,58 | Akt | 200,56 |
| = | | 104,74 | Akt | 687,08 |

Dieses Beispiel ist analog zu Beispiel 1, hier jedoch für den Fall einer Summation in der nationalen Währung.

### Beispiel 4:

Es soll eine Mehrfachsumme in nationaler Währung umgerechnet werden. 100 FRF + 20 FRF + 25 FRF = 145 FRF = 22,11 EURO

| Eingabe | EURO Anzeige | | FRF Anzeige | |
|---|---|---|---|---|
| FRF | | | Akt | 0 |
| 100.00 | | 15,24 | Akt | 100 |
| + | | 0 | Akt | 0 |
| 20,00 | | 3,05 | Akt | 20 |
| + | | 0 | Akt | 0 |
| 25,00 | | 3,81 | Akt | 25 |
| = | | 22.11 | Akt | 145.00 |

### Beispiel 5:

Es soll eine Multiplikation eines in Euro eingegebenen Betrages durchgeführt werden.
1050 EURO * 2 = 2100 EURO = 13755,10 FRF

| Eingabe | EURO Anzeige | | FRF Anzeige | |
|---|---|---|---|---|
| EURO | Akt | 0 | | |
| 1050 | Akt | 1050,00 | | 6887,55 |
| * | | 0 | | 0 |
| 2 | | 2 | | 2 |
| = | Akt | 2100,00 | | 13775,10 |

Zur Verdeutlichung dessen, dass der Faktor, mit dem der Währungsbetrag multipliziert wird, nicht umzurechnen ist, wird das Aktivierungssymbol für die Eingabe des Faktors gelöscht und in beiden Anzeigezeilen 28 und 30 zugleich angezeigt. Nach Betätigung der Auslösetaste erscheint das Aktivierungsymbol wieder in der Euro-Anzeigezeile 28.

### Beispiel 6:

Es soll ein in Euro eingegebener Währungsbetrag dividiert werden.
2100 EURO / 3,1416 = 668,45 EURO = 4384,74 FRF

| Eingabe | EURO Anzeige | | FRF Anzeige | |
|---|---|---|---|---|
| EURO | Akt | 0 | | |
| 2100 | Akt | 2100,00 | | 13775,10 |
| / | | 0 | | 0 |
| 3,1416 | | 3,1416 | | 3,1416 |
| = | Akt | 668,45 | | 4384,74 |

### Beispiel 7:

Es sollen zwei Beträge addiert werden, von denen der erste in Euro und der zweite in nationaler Währung eingegeben wird.
10 EURO + 50,00 FRF = 17,62 EURO = 115,58 FRF

| Eingabe | EURO Anzeige | | FRF Anzeige | |
|---|---|---|---|---|
| EURO | Akt | 0 | | |
| 10 | Akt | 10,00 | | 65,60 |
| + | Akt | 0 | | 0 |
| FRF | | | Akt | 0 |
| 50 | | 7,62 | Akt | 50 |
| = | Akt | 17,62 | | 115,58 |

Zum Wechsel der Eingabewährung wird nach Betätigung der Funktionstaste 18 ("+") die Auswahltaste 16 für die nationale Währung gedrückt. Daraufhin wird die Euro-Anzeigezeile 28 gelöscht und das Aktivierungssymbol erscheint in der FRF-Anzeigezeile 30 zusammen mit einer "0". Anschließend wird der Betrag in Französischen Francs eingegeben, wobei wie gewohnt seine Umrechnung in Euro Schritt für Schritt erfolgt und angezeigt wird. Auf Betätigung der Auslösetaste 26 (" = ") hin wird die Summe der eingegebenen Beträge berechnet und in beiden Währungen angezeigt.

### Beispiel 8:

Es sollen zwei in unterschiedlichen Währungen eingegebene Beträge subtrahiert werden.
12,5 EURO 100,00 FRF = -2,74 EURO

| Eingabe | EURO Anzeige | | FRF Anzeige | |
|---|---|---|---|---|
| EURO | Akt | 0 | | |
| 12,5 | Akt | 12,5 | | 81,99 |
| - | Akt | 0 | | |
| FRF | | | Akt | 0 |
| 100 | | 15,24 | Akt | 100 |
| = | Akt | -2,74 | | -17,97 |

Dieses Beispiel zeigt die Vorteile des erfindungsgemäßen Währungsrechners besonders deutlich. In der Praxis wird es unmittelbar nach der Währungsumstellung bei Kaufgeschäften häufig vorkommen, dass der in Euro ausgewiesene Betrag nicht exakt passend in nationaler Währung bezahlt wird. Durch Subtraktion des bezahlten Betrages in Franc vom Kaufpreis in Euro wird das Wechselgeld mit Hilfe des Währungsumrechners in beiden Währungen bestimmt, so dass ein Verkäufer den genauen Wechselgeldbetrag in Euro zurückgeben kann.

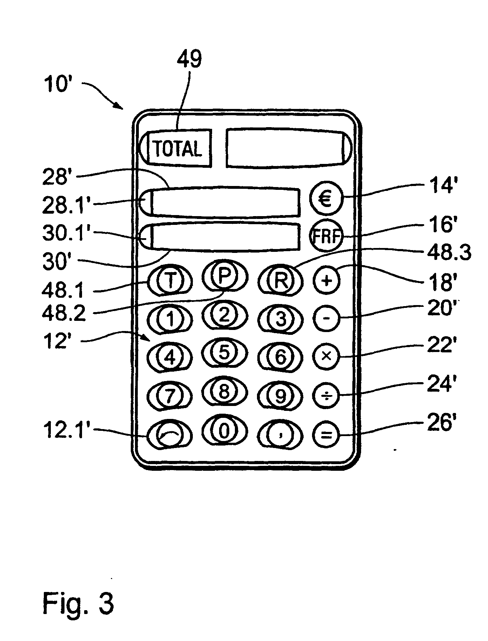

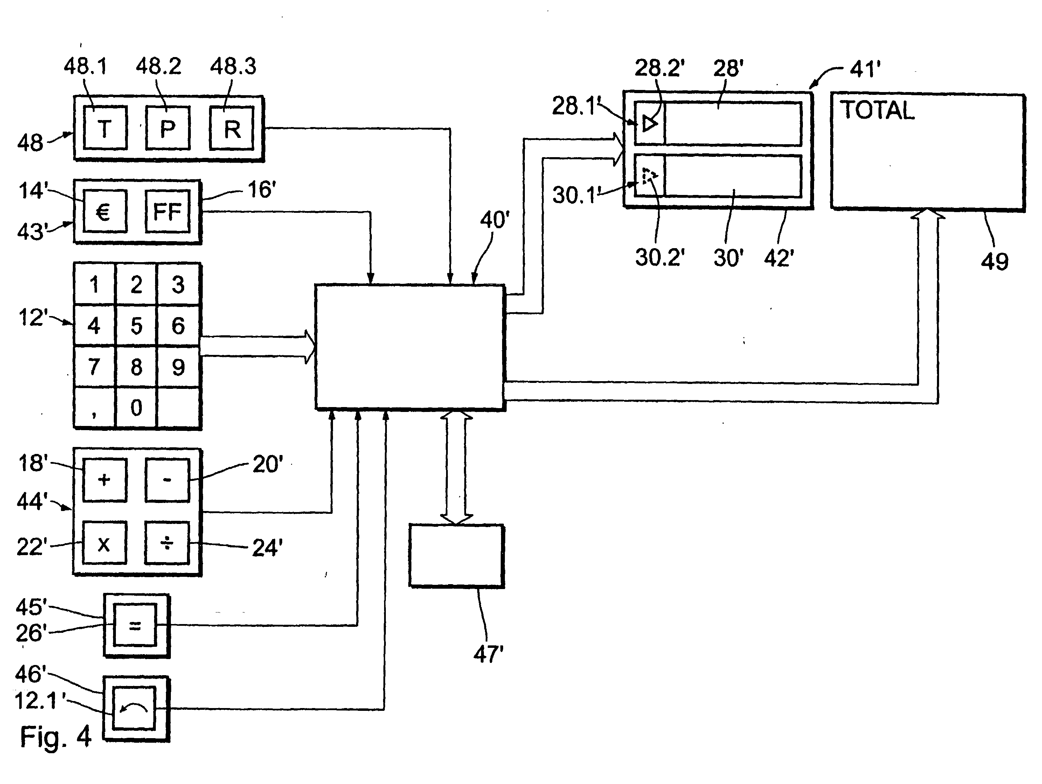

Die Figuren 3 und 4 zeigen eine Ansicht bzw. ein Blockschaltbild eines weiteren Ausführungsbeispiels der erfindungsgemäßen Vorrichtung 10'. Dieses entspricht in seiner grundsätzlichen Gestaltung und Funktion der Ausführung aus Figur 1 und 2, so dass hier lediglich auf die Unterschiede eingegangen werden soll.

Der Unterschied besteht darin, dass die Vorrichtung 10' eine Rückgeldfunktion umfasst, bei der in einem ersten Funktionsschritt ein Rechnungsbetrag eingegeben wird, in einem zweiten Funktionsschritt ein Zahlungsbetrag eingegeben wird und in einem dritten Funktionsschritt der Rückgeldbetrag ausgegeben wird, welcher die Differenz des Rechnungsbetrages und des Zahlungsbetrages darstellt.

Den jeweiligen Funktionsschritt kann der Benutzer über die zweiten Auswahlelemente 48.1, 48.2 und 48.3 einer mit der Verarbeitungseinheit 40' verbundenen zweiten Auswahleinheit 48 nach Belieben anwählen. Dabei ist das Auswahlelement 48.1 dem ersten Funktionsschritt, das Auswahlelement 48.2 dem zweiten Funktionsschritt und das Auswahlelement 48.3 dem dritten Funktionsschritt zugeordnet. Sie tragen jeweils eine Kennzeichnung, welche dem betreffenden Funktionsschritt entspricht. In der hier dargestellten Version für Französische Francs "T" ("Total") für den Rechnungsbetrag also den ersten Funktionsschritt, "P" ("Payé") für den Zahlungsbetrag also den zweiten Funktionsschritt und "R" ("Rendu") für den Rückgeldbetrag also den dritten Funktionsschritt.

Zur Anzeige, welcher Funktionsschritt zuletzt angewählt wurde, ist ein dem Ausgabebereich 42' zugeordnetes Ausgabefeld 49 vorgesehen, auf dem eine dem zuletzt ausgewählten Funktionsschritt entsprechende Nachricht bzw. Information dargestellt wird. Im gezeigten Beispiel für den dargestellten ersten Funktionsschritt also das Wort "Total".

Die Verarbeitungseinheit 40' ist so ausgebildet, dass bei Betätigung eines der Auswahlelemente 48.1 bis 48.3 auf dem ersten Ausgabebereich 42' die ebenfalls in einem schnell zugänglichen Speicherbereich des Speichers 47' abgelegten, zuletzt für den zugehörigen Funktionsschritt getätigten Eingaben dargestellt werden. Hierbei wird, wie schon bei der zu Figur 1 beschriebenen Ausführung, gleichzeitig nicht nur der Eingabewert in der einen Währung dargestellt, sondern es wird auch der diesem Wert entsprechende Umrechnungswert in der anderen Währung dargestellt. Wurde für den zugehörigen Funktionsschritt nach dem letzten Einschalten bzw. Rücksetzen der Vorrichtung bisher noch keine Eingabe getätigt, so wird in beiden Zeilen 28' und 30' des Ausgabebereichs 42' eine "0" dargestellt.

Weiterhin ist die Verarbeitungseinheit 40' so ausgebildet, dass, wie oben zu Figur 1 und 2 ebenfalls beschrieben, in Abhängigkeit von der zuletzt erfolgten Betätigung der Tasten 14' bzw. 16' der ersten Auswahleinrichtung 43' ein Aktivierungssymbol 28.2' bzw. 30.2' in der zugehörigen Ausgabezeile 28' bzw. 30' dargestellt wird. Hierdurch erkennt der Benutzer, in welcher Währung die nächste Eingabe erfolgt, und kann diese Einstellung durch Betätigungen der Tasten 14' bzw. 16' gegebenenfalls in der oben ebenfalls beschriebenen Weise ändern. Die Verarbeitungseinheit 40' ist im gezeigten Beispiel weiterhin so ausgebildet, dass bei einem Wechsel des Funktionsschrittes und einer unmittelbaren Eingabe über die Zifferntasten zu 0 bis 9 der Eingabeeinheit 12' gegebenenfalls der zuletzt für den zugehörigen Funktionsschritt getätigte Eingabewert überschrieben wird. Es versteht sich jedoch, dass bei anderen Varianten für diesen Fall auch vorgesehen sein kann, dass zunächst die Löschtaste 12.1' betätigt werden muss, bevor eine erneute Eingabe erfolgen kann.

Die Verarbeitungseinheit 40' ist weiterhin so ausgebildet, dass während jedes Funktionsschrittes in der oben zu den Figuren 1 und 2 beschriebenen Weise Berechnungen mit den Grundrechenarten durchgeführt werden können. So können beispielsweise im ersten Funktionsschritt einzelne Beträge derselben oder unterschiedlicher Währungen miteinander addiert werden und zusätzlich oder alternativ einzelne Beträge mit Zahlen multipliziert werden, um den gesamten zu bezahlenden Rechnungsbetrag zu ermitteln. Anschließend können im zweiten Schritt Beträge in den beiden Währungen miteinander addiert werden, um den gesamten bezahlten Zahlungsbetrag zu ermitteln. Im dritten Schritt werden dann die Rückgeldbeträge in beiden Währungen ausgegeben, wobei dann durch Subtraktion bereits erhaltener Beträge in einer oder beiden Währungen der noch verbleibende Rückgeldbetrag in beiden Währungen ermittelt werden kann.

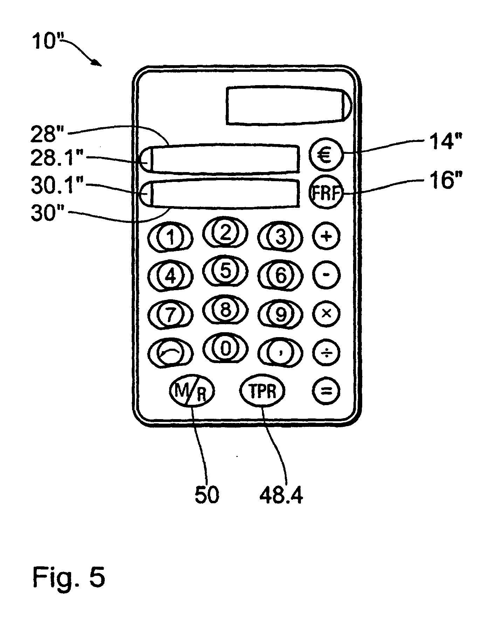

Figur 5 zeigt eine Variante der erfindungsgemäßen Vorrichtung 10", die im wesentlichen der Vorrichtung aus Figur 3 gleicht, so dass auch hier lediglich auf die Unterschiede eingegangen werden soll.

Der Unterschied besteht darin, dass nur ein zweites Auswahlelement 48.4 vorgesehen ist, durch dessen Betätigungen jeweils in den nächsten Funktionsschritt gewechselt werden kann, wobei an den dritten Funktionsschritt wiederum der erste Funktionsschritt anschließt. Mit anderen Worten gelangt man beispielsweise durch dreimaliges Betätigen des Auswahlelements 48.4 vom ersten in den zweiten Funktionsschritt, vom zweiten in den dritten Funktionsschritt und wiederum vom dritten in den ersten Funktionsschritt.

Weiterhin ist eine mit der Verarbeitungseinheit verbundene Modustaste 50 vorgesehen, mit der aus dem Rückgeldmodus mit der beschriebenen Rückgeldfunktion in den zu den Figuren 1 und 2 beschriebenen einfachen Umrechnungsmodus gewechselt werden kann. Soll vom Umrechnungsmodus in den Rückgeldmodus gewechselt werden, muss lediglich das zweite Auswahlelement 48.4 betätigt werden. Hierbei ist die Verarbeitungseinheit so ausgebildet, dass sie sofort in den zweiten Funktionsschritt wechselt, sofern vor dem Betätigen des zweiten Auswahlelements 48.4 bereits eine Eingabe erfolgte. Ist dies nicht der Fall, verbleibt die Verarbeitungseinheit im ersten Funktionsschritt, so dass eine Eingabe für den Rechnungsbetrag erfolgen kann. Es versteht sich jedoch, dass in anderen Fällen auch vorgesehen sein kann, dass bei erstmaliger Betätigung des zweiten Auswahlelements nach Einschalten oder Rücksetzen der Vorrichtung stets in den ersten Funktionsschritt gewechselt wird und sämtliche bisherigen Eingaben gelöscht bzw. überschrieben werden. Weiterhin versteht es sich, dass bei anderen Varianten ein solcher Wechsel zwischen Umrechnungsmodus und Rückgeldmodus fehlen kann, sondern nach dem Einschalten oder Rücksetzen der Vorrichtung ständig im ersten Funktionsschritt des Rückgeldmodus gearbeitet wird und nur durch Betätigung des zweiten Auswahlelements in die anderen Funktionsschritte gewechselt wird.

Ein weiterer Unterschied zur Ausführung aus Figur 3 besteht darin, dass die Displaybereiche 28.1" und 30.1" die Anzeigefelder darstellen, in denen eine Information dargestellt wird, die dem zuletzt ausgewählten Funktionsschritt entspricht. So wird im gezeigten Beispiel in den Displaybereichen 28.1" und 30.1" jeweils ein dem ausgewählten Funktionsschritt entsprechender Buchstabe dargestellt, der den betreffenden Buchstaben auf dem zweiten Auswahlelement 48.4 entspricht. Dieser bildet gleichzeitig das Aktivierungssymbol, indem derjenige Buchstabe blinkt, der in der Zeile steht, die der zuletzt über die ersten Auswahlelemente 14" bzw. 16" ausgewählten Währung zugeordnet ist.

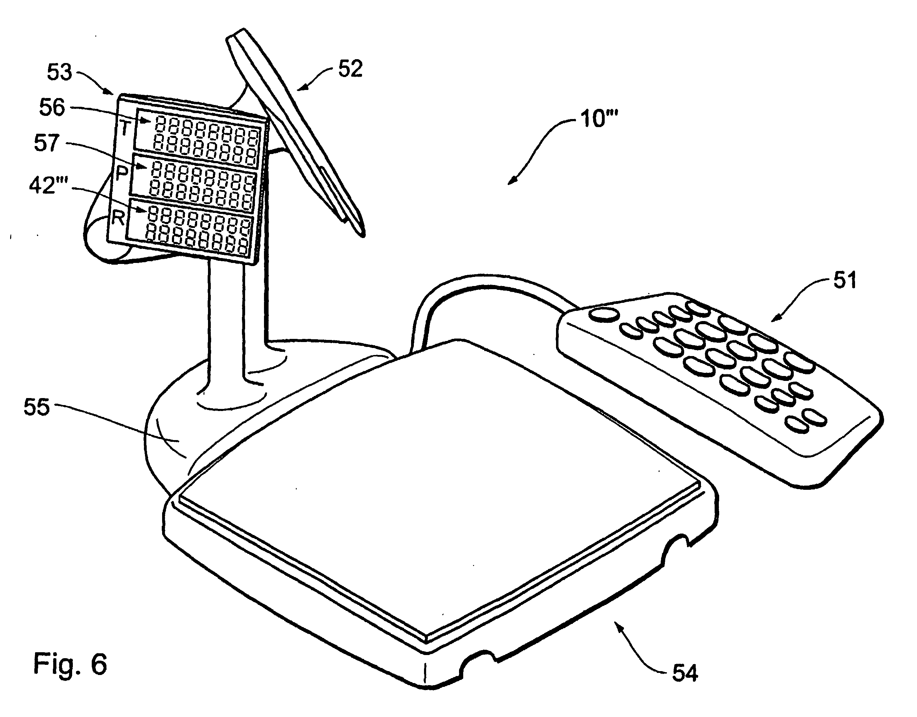

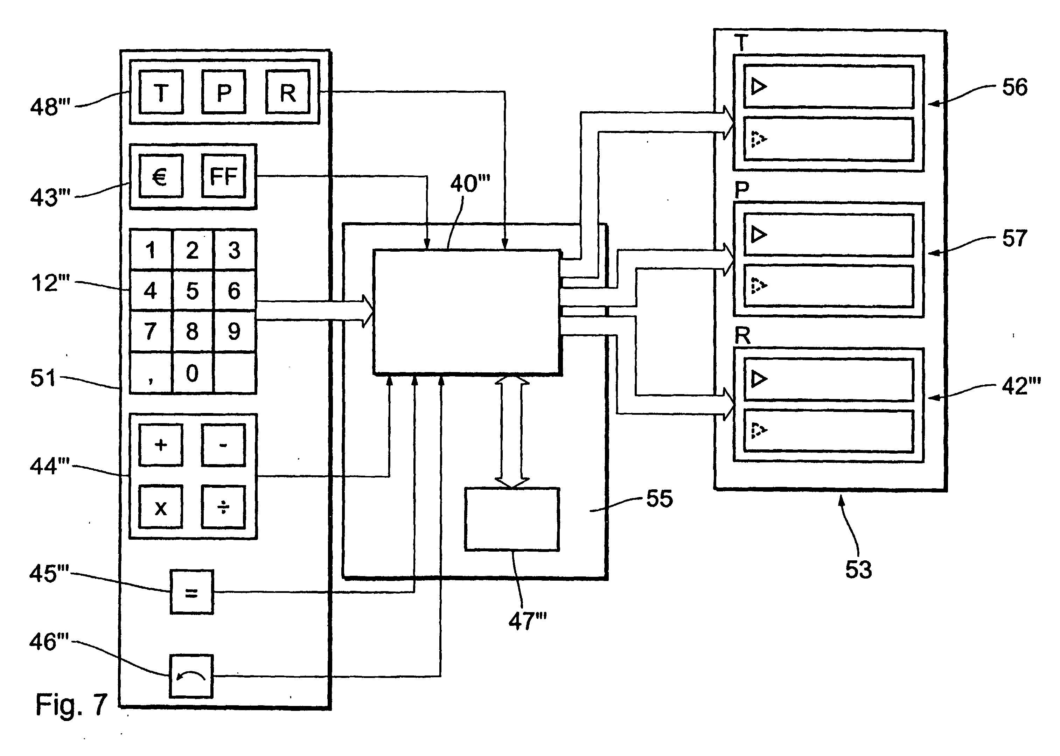

Die Figuren 6 und 7 zeigen eine perspektivische Ansicht bzw. ein Blockschaltbild eines weiteren Ausführungsbeispiels der erfindungsgemäßen Vorrichtung 10"'. Die Vorrichtung 10"' bildet hierbei einen Bestandteil einer Registrierkasse mit einer Tastatur 51, zwei identischen Displays 52 und 53 - von denen in Figur 7 nur das Display 53 dargestellt ist - und einer Ablage 54 für Geld etc.

Die Tastatur 51 umfasst die Einrichtungen 12"', 43''', 44"', 45"', 46''' und 48"', welche den entsprechend nummerierten Einrichtungen in Figur 3 und 4 entsprechen. Die Displays 52 und 53 sind verstellbar an einem Standfuß 55 angeordnet, in dem die Verarbeitungseinheit 40"' sowie der Speicher 47''' integriert sind.

Es versteht sich, dass bei anderen Varianten der Erfindung auch nur eine Display auf dem Standfuß angeordnet sein kann, während das andere Display beispielsweise auf einem gesonderten Ständer oder an der Tastatur angebracht sein kann.

Weiterhin versteht es sich, dass die Verbindung zwischen den Einrichtungen der Tastatur und des Standfußes nicht notwendigerweise in Form einer Leitung erfolgen muss, wie dies in Figur 6 dargestellt ist. Vielmehr kann die Verbindung bei bevorzugten Varianten auch über eine drahtlose Kommunikationsverbindung erfolgen, die nach einem beliebigen Standard arbeitet. So können beispielsweise ein Infrarot-Standards (IrDA) oder andere Standards, wie Bluetooth etc., verwendet werden.

Die Vorrichtung 10''' entspricht in ihrem grundsätzlichen Aufbau ihrer grundsätzlichen Funktion der zu den Figuren 3 und 4 beschriebenen Variante, so dass hier lediglich die Unterschiede erläutert werden sollen.

Der wesentliche Unterschied besteht darin, dass auf den beiden Displays 52 und _ 53 für jeden Funktionsschritt ein gesonderter Ausgabebereich vorgesehen ist. So ist für den ersten Funktionsschritt der zweite Ausgabebereich 56, für den zweiten Funktionsschritt der dritte Ausgabebereich 57 und für den dritten Funktionsschritt der erste Ausgabebereich 42"' vorgesehen. Diese sind jeweils mit einer Kennzeichnung ("T", "P", "R") für den jeweiligen Funktionsschritt versehen. Die Anzeige auf den Ausgabebereichen erfolgt gesteuert durch die Verarbeitungseinheit 40"' in der zu den Figuren 3 und 4 beschriebenen Weise mit dem Unterschied, dass die Ausgabe gleichzeitig für alle Funktionsschritte erfolgt.

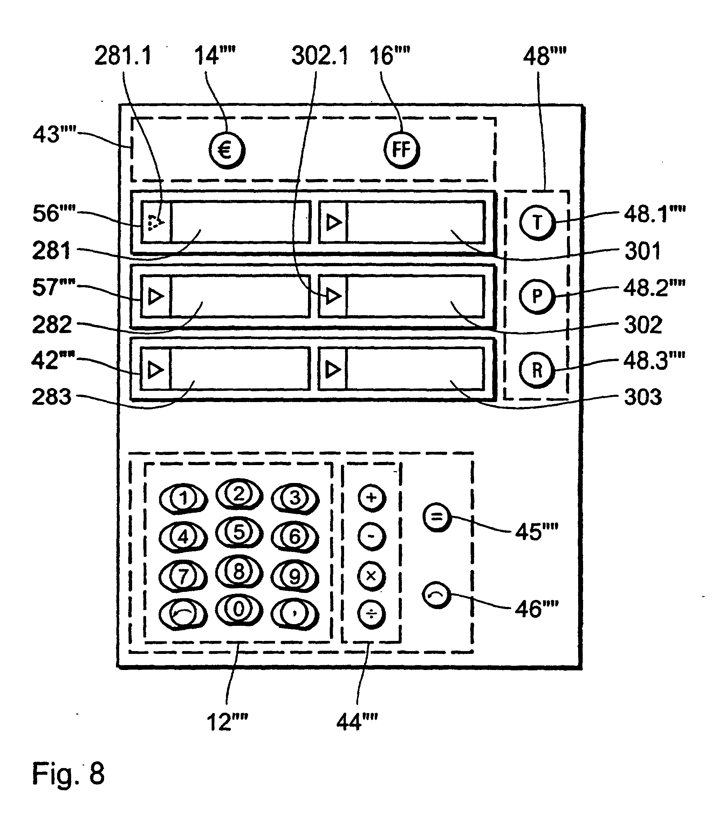

Figur 8 zeigt eine besonders bevorzugte Anordnung der drei Ausgabebereiche 56"", 57"" und 42 "" mit jeweils zwei Anzeigezeilen, von denen eine für eine erste und die andere für eine zweite Währung vorgesehen ist. Die beiden Anzeigezeilen eines jeden Ausgabebereiches sind nebeneinander angeordnet. Die Ausgabebereiche 56"", 57"" und 42"" sind untereinander angeordnet. Auf diese Weise ergibt sich eine Zeilen- und Spaltenanordnung der insgesamt sechs Ausgabezeilen, von denen die erste Spalte mit insgesamt drei Ausgabezeilen 281, 282 und 283 einer ersten Währung, beispielsweise EURO zugeordnet ist, währende die zweite Spalte mit insgesamt drei Ausgabezeilen 30.1, 30.2 und 30.3 einer zweiten Währung, beispielsweise FRF zugeordnet ist. Jede Zeile dieser Matrix stellt jeweils einen Ausgabebereich 56"", 57"" und 42"" dar. Die Zuordnung der Ausgabebereiche zu den Funktionsschritten ist analog zu den Ausführungsbeispielen in den Figuren 6 und 7. Um eine intuitive und fehlerfreie Bedienung zu ermöglichen, sind in dem in Figur 8 dargestellten Ausführungsbeispiel die dem jeweiligen Funktionsschritt zugeordneten zweiten Auswahlelemente 48.1"", 48.2"" und 48.3"" in der jeweils entsprechenden Zeile rechts neben den Ausgabeeinheiten 56"", 57"" und 42"" angeordnet. Eine Anordnung der zweiten Auswahlelemente 48.1, 48.2 und 48.3 in gleicher Zeile links neben der jeweiligen Ausgabeeinheit ist ebenso möglich. Wesentlich ist, dass die jeweilige Ausgabeeinheit und das zugeordnete zweite Auswahlelement in derselben Zeile der Zeilen- und Spaltenmatrix stehen, welches eine intuitive Auswahl des jeweiligen Funktionsschrittes durch Betätigen des entsprechenden zweiten Auswahlelementes ermöglicht. Da für jeden Funktionsschritt die Eingabe eines Betrages alternativ in der ersten oder in der zweiten Währung folgen kann, sind in dem Ausführungsbeispiel gemäß Figur 8 die der Wahl der Währung dienenden ersten Auswahltasten 14"" und 16"" oberhalb in gleicher Spalte der in der jeweiligen Währung zugeordneten Anzeigezeilen 281, 282 und 283 bzw. 301, 302 und 303 zugeordnet. Die ersten Auswahltasten 14"" und 16"" können alternativ auch in gleicher Spalte unterhalb der Anzeigezeilen für die entsprechende Währung angeordnet sein. Altemativ, aber weniger bevorzugt können die Spalten und Zeilen der sich ergebenden Matrix sowohl hinsichtlich der Anzeigezeilen als auch hinsichtlich der ersten und zweiten Auswahlelemente vertauscht sein. Diese Zuordnung ist jedoch weniger intuitiv, da die Zahlen einer Währung für eine Abrechnung üblicherweise übereinander und nicht nebeneinander angeordnet werden.

Die gemäß Figur 8 gewählte spalten- und zeilenartige Zuordnung der ersten und zweiten Auswahlelemente zu den entsprechenden Anzeigezeilen ermöglicht eine besonders einfache intuitive Bedienung. Ein Rechnungsbetrag in EURO wird beispielsweise eingegeben, indem zunächst in beliebiger Reihenfolge die Währungstaste 14"" und die Tasten 48.1"" "T" betätigt werden, um die obere linke Eingabezeile 281 eindeutig auszuwählen. Entsprechend blinkt das Aktivierungssymbol 281.1. Soll in einem nächsten Schritt ein Zahlungsbetrag in FRF eingegeben werden, werden in beliebiger Reihenfolge die Auswahlelemente 16"" und 48.2" "P" betätigt, um die Anzeigezeile 302 zu aktivieren. Dann blinkt das entsprechende Aktivierungssymbol 302.1. Die Funktionsweise der Ausführungsform gemäß Figur 8 entspricht im Übrigen der der Ausführungsvarianten aus Figuren 6 und 7. Insbesondere ist ein Tastenfeld mit Zifferntasten 12"" und Funktionstasten 44"" sowie einer Auslösetaste 45"" und einer Löschtaste 46"" vorgesehen. Die Anordnung dieses Tastenfeldes relativ zu der zuvor beschriebenen Anordnung der Anzeigezeilen und der ersten und zweiten Auswahlelemente ist im Prinzip beliebig. Alternativ zu der gewählten Anordnung des Tastenfeldes unterhalb der Anzeigezeilen kann das Tastenfeld auch oberhalb oder links oder rechts neben den Anzeigezeilen angeordnet sein. Die in Figur 8 dargestellte Anordnung der Tastenund Anzeigezeilen ist die bevorzugte Anordnung dieser Elemente auf einem Tischrechner oder einem größeren Taschenrechner. Anstelle separater Tasten als erster und zweiter Auswahlelemente, wie in Figur 8 dargestellt, können auch die Anzeigezeilen 281, 282, 283, 301, 302 und 303 berührungsempfindlich sein und somit selbst als Auswahlelemente dienen. Durch Berühren eines Anzeigeelementes 281, 282, 283, 301, 302 oder 303 werden dann die dem entsprechenden Anzeigeelement zugeordneten ersten und zweiten Auswahlelemente simultan aus ausgelöst. Jedes Anzeigeelement 281, 282, 283, 301, 302 und 303 ist in dieser nicht dargestellten alternativen Ausführungsform somit jeweils erstes und zweites Auswahlelement zugleich. Angestrebte intuitive Bedienbarkeit des Währungsumrechners wird somit allein durch die zeilen- und spaltenweise Anordnung der sechs Anzeigezeilen 281, 282, 283, 301, 302 und 303 erzielt.

Es versteht sich, dass die Variante mit drei Ausgabebereichen nicht nur für entsprechend große Vorrichtungen vorgesehen sein kann, es ist auch möglich, diese drei Ausgabebereiche für einen kleinen Währungsumrechner im Taschenformat vorzusehen. Weiterhin müssen nicht notwendigerweise zwei oder mehrere entsprechende Displays vorgesehen sein, sondern es kann auch genügen das nur ein Display mit drei Ausgabebereichen vorgesehen ist.

Ebenso versteht es sich, dass die eben beschriebenen Varianten für die Umrechnung zwischen mehreren unterschiedlichen Währungen vorgesehen sein können, wobei dann eine entsprechende Währungsauswahleinrichtung mit einem Währungsauswahlelement für die beiden Währungen vorzusehen ist. Ebenso ist es natürlich möglich die vorbeschriebenen Varianten für eine gleichzeitige Umrechnung nicht nur zwischen zwei Währungen sondern auch zwischen mehreren Währungen vorzusehen. Hierbei sind dann lediglich entsprechend mehrere Ausgabezeilen in den betreffenden Ausgabebereichen und gegebenenfalls mehrere erste Auswahlelemente vorzusehen.

## Patentansprüche

1. Vorrichtung zur Währungsumrechnung von einer ersten Währung in eine zweite Währung und umgekehrt, mit einer Eingabeeinheit (12; 12'; 12"'), einer damit verbundenen Verarbeitungseinheit (40; 40'; 40"'), einer mit der Verarbeitungseinheit (40; 40'; 40''') verbundenen Ausgabeeinheit (41; 41') und mit mindestens einem mit der Verarbeitungseinheit (40; 40'; 40"') verbundenen ersten Auswahlelement (14, 16; 14', 16'; 14", 16") zur Bestimmung einer Eingabewährung, wobei die Verarbeitungseinheit (40; 40'; 40"') zur Durchführung der Umrechnung eines eingegebenen Währungsbetrages, zur Durchführung von Grundrechenoperationen mit Eingabebeträgen sowie zur Steuerung der Ausgabe auf der Ausgabeeinheit (41; 41') ausgebildet ist und die Ausgabeeinheit (41; 41') wenigstens einen ersten Ausgabebereich (42; 42'; 42''') mit zwei Ausgabezeilen (28, 30; 28', 30'; 28", 30") zur im wesentlichen gleichzeitigen Ausgabe eines eingegebenen und eines umgerechneten Währungsbetrages aufweist, **dadurch gekennzeichnet, dass** die Verarbeitungseinheit (40; 40'; 40"') zur zusätzlichen wahlweisen Durchführung der Grundrechenoperationen mit unterschiedlichen Währungen ausgebildet und dass eine Rückgeldfunktion zur Eingabe eines Rechnungsbetrages in einem ersten Funktionsschritt und eines Zahlungsbetrages in einem zweiten Funktionsschritt sowie zur Ausgabe des die Differenz des Rechnungsbetrages und des Zahlungsbetrages darstellenden Rückgeldbetrages in einem dritten Funktionsschritt in beiden Währungen auf dem ersten Ausgabebereich (42'; 42"') vorgesehen ist, wobei wenigstens ein mit der Verarbeitungseinheit (40'; 40"') verbundenes zweites Auswahlelement (48.1, 48.2, 48.3; 48.4) zur freien Auswahl des Funktionsschrittes vorgesehen ist.

2. Vorrichtung nach Anspruch 1, **dadurch gekennzeichnet, dass** die Ausgabeeinheit (41') ein Ausgabefeld (49; 28.1'', 30.1'') zur Ausgabe einer den zuletzt gewählten Funktionsschritt kennzeichnenden Information umfasst.

3. Vorrichtung nach Anspruch 2, **dadurch gekennzeichnet, dass** das Ausgabefeld (49; 28.1", 30.1") dem ersten Ausgabebereich (42') zugeordnet ist.

4. Vorrichtung nach Anspruch 1, **dadurch gekennzeichnet, dass** die Ausgabeeinheit einen zweiten Ausgabebereich (56) mit zwei Ausgabezeilen zur Ausgabe des Rechnungsbetrages und einen dritten Ausgabebereich (57) mit zwei Ausgabezeilen zur Ausgabe des Zahlungsbetrages umfasst.

5. Vorrichtung nach Anspruch 4, **dadurch gekennzeichnet, dass** den Ausgabebereichen (42"', 56, 57) jeweils eine den zugehörigen Funktionsschritten entsprechende Kennzeichnung zugeordnet ist.

6. Vorrichtung nach Anspruch 4 oder 5 **dadurch gekennzeichnet, dass** die insgesamt sechs Ausgabezeilen (281, 282, 283, 301, 302, 303) derart in einer Zeilen- und Spaltenmatrix angeordnet sind, dass eine erste Zeile der Matrix den zweiten Ausgabebereich (56"") bildet, eine zweite Zeile der Matrix den dritten Ausgabebereich (57"") und eine dritte Zeile der Matrix dem ersten Ausgabebereich (42"") zugeordnet ist, während die Ausgabezeilen (281, 282, 283) einer ersten Spalte der Matrix einer ersten Währung zugeordnet sind und die Ausgabezeilen (301, 302, 303) für die zweite Währung der zweiten Spalte der Matrix zugeordnet sind.

7. Vorrichtung nach Anspruch 6, **dadurch gekennzeichnet, dass** die ersten Auswahlelemente (14"", 16"") jeweils einer Spalte der Matrix zugeordnet und ober- oder unterhalb der entsprechenden Anzeigezeilen angeordnet sind, während die zweiten Auswahlelemente (48.1"", 48.2"", 48.3"") jeweils einer Zeile der Matrix zugeordnet und links oder rechts neben dem entsprechenden Ausgabebereich (56"", 57"", 42"") angeordnet sind.

8. Vorrichtung nach Anspruch 5, **dadurch gekennzeichnet, dass** die zweiten Auswahlelemente (48.1"", 48.2"", 48.3"") jeweils in unmittelbarer Nachbarschaft zu dem zweiten, dritten und ersten Ausgabebereich (56"", 57"", 42"") zugeordnet angeordnet sind.

9. Vorrichtung nach einem der Ansprüche 1 bis 8, **dadurch gekennzeichnet, dass** die Verarbeitungseinheit (40'; 40''') zur Durchführung der Grundrechenoperationen, insbesondere zur zusätzlichen wahlweisen Durchführung der Grundrechenoperationen mit unterschiedlichen Währungen, wenigstens während des ersten Funktionsschrittes ausgebildet ist.

10. Vorrichtung nach einem der vorhergehenden Ansprüche, **dadurch gekennzeichnet. dass** die zur Währungsumrechnung erforderlichen Konstanten als Festwerte in einem mit der Verarbeitungseinheit (40; 40'; 40''') verbundenen Speicher (47; 47'; 47''') abgelegt sind.

11. Vorrichtung nach einem der vorhergehenden Ansprüche, **dadurch gekennzeichnet, dass** zwei erste Auswahlelemente (14, 16; 14', 16'; 14", 16") vorgesehen sind und jedes erste Auswahlelement (14, 16; 14', 16'; 14", 16") einer Anzeigezeile (28, 30; 28', 30'; 28", 30'') zugeordnet ist, wobei die Verarbeitungseinheit (40; 40'; 40"') zur ausschließlichen Ausgabe von Beträgen in der durch das zugeordnete erste Auswahlelement (14,16; 14', 16'; 14", 16") auswählbaren Währung in der jeweiligen Anzeigezeile (28, 30; 28', 30'; 28", 30") ausgebildet ist.

12. Vorrichtung nach einem der vorhergehenden Ansprüche, **dadurch gekennzeichnet, dass** die Verarbeitungseinheit (40; 40'; 40''') zur Währungsumrechnung Eingabeschritt für Eingabeschritt und zur Ausgabe des Ergebnisses der Umrechung Eingabeschritt für Eingabeschritt in der zugeordneten Anzeigezeile (28, 30; 28', 30'; 28", 30") ausgebildet ist.

13. Vorrichtung nach einem der vorhergehenden Ansprüche, **dadurch gekennzeichnet. dass** die Verarbeitungseinheit (40; 40'; 40''') zur im wesentlichen gleichzeitigen Ausgabe des in die andere Währung umgerechneten Betrages bei Eingabe eines Betrages in der einen Währung ausgebildet ist.

14. Vorrichtung nach einem der vorhergehenden Ansprüche, **dadurch gekennzeichnet, dass** die Verarbeitungseinheit (40; 40'; 40''') zur im wesentlichen gleichzeitigen Ausgabe des Rechenergebnisses in beiden Währungen bei Verrechnung zweiter Beträge unterschiedlicher oder gleicher Währung ausgebildet ist.

15. Vorrichtung nach einem der vorhergehenden Ansprüche, **dadurch gekennzeichnet. dass** die Verarbeitungseinheit (40; 40'; 40"') zur Umrechnung zwischen der ersten Währung und einer Anzahl zweiter Währungen ausgebildet ist, wobei ein mit der Verarbeitungseinheit (40; 40'; 40''') verbundenes Währungsauswahlelement zur Auswahl der zweiten Währung vorgesehen ist.

16. Vorrichtung nach einem der vorhergehenden Ansprüche, **dadurch gekennzeichnet, dass** sie als Registrierkasse mit einer einem Kunden zuwendbaren Ausgabeeinheit (53) und einer einem Verkäufer zuwendbaren Ausgabeeinheit (52) ausgebildet ist.

## Claims

1. A device for currency conversion from a first currency into a second currency and vice-versa, comprising an input unit (12; 12'; 12"'), a processing unit (40; 40'; 40"') connected thereto, an output unit (41; 41') connected to the processing unit (40; 40'; 40"') and at least one first selection element (14, 16; 14', 16'; 14". 16") connected to the processing unit (40; 40'; 40"') for determining an input currency, wherein the processing unit (40; 40'; 40"') is adapted to carry out conversion of an inputted currency amount, to carry out basic calculation operations with input amounts and to control output on the output unit (41; 41') and the output unit (41; 41') has at least a first output region (42; 42'; 42"') with two output lines (28, 30; 28', 30'; 28", 30") for the substantially simultaneous output of an inputted and a converted currency amount, **characterised in that** the processing unit (40; 40'; 40"') is adapted for additionally selectively carrying out the basic calculation operations with different currencies and that there is provided a monetary change function for the input of a calculation amount in a first function step and a payment amount in a second function step and for the output of the monetary change amount representing the difference of the calculation amount and the payment amount in a third function step in both currencies on the first output region (42'; 42"') wherein there is provided at least a second selection element (48.1, 48.2, 48.3; 48.4) connected to the processing unit (40'; 40"') for free selection of the function step.

2. A device according to claim 1 **characterised in that** the output unit (41') includes an output panel (49; 28.1", 30.1") for the output of an item of information identifying the function step last selected.

3. A device according to claim 2 **characterised in that** the output panel (49; 28.1", 30.1") is associated with the first output region (42').

4. A device according to claim 1 **characterised in that** the output unit includes a second output region (56) with two output lines for the output of the calculation amount and a third output region (57) with two output lines for the output of the payment amount.

5. A device according to claim 4 **characterised in that** associated with each of the output regions (42"', 56, 57) is a respective identification corresponding to the associated function step.

6. A device according to claim 4 or claim 5 **characterised in that** the total of six output lines (281, 282, 283, 301, 302, 303) are arranged in a row and column matrix in such a way that a first row of the matrix forms the second output region (56""), a second row of the matrix forms the third output region (57"") and a third row of the matrix is associated with the first output region (42"") while the output rows (281, 282, 283) of a first column of the matrix are associated with a first currency and the output rows (301, 302, 303) for the second currency are associated with the second column of the matrix.

7. A device according to claim 6 **characterised in that** the first selection elements (14"", 16"") are associated with a respective column of the matrix and are arranged above or below the corresponding display lines while the second selection elements (48.1"", 48.2"", 48.3"") are respectively associated with a row of the matrix and are arranged at the left or the right beside the corresponding output region (56"", 57"", 42"").

8. A device according to claim 5 **characterised in that** the second selection elements (48.1"", 48.2"", 48.3"") are respectively arranged associated in the immediate proximity with the second, third and first output regions (56"", 57"", 42"").

9. A device according to one of claims 1 to 8 **characterised in that** the processing unit (40'; 40"') is adapted to carry out the basic calculation operations, in particular to additionally selectively carry out the basic calculation operations with different currencies, at least during the first function step.

10. A device according to one of the preceding claims **characterised in that** the constants required for currency conversion are stored as fixed values in a memory (47; 47'; 47"') connected to the processing unit (40; 40'; 40"').

11. A device according to one of the preceding claims **characterised in that** there are provided two first selection elements (14, 16; 14', 16'; 14", 16") and that each first selection element (14, 16; 14', 16'; 14", 16") is associated with a display line (28, 30; 28', 30'; 28", 30"), wherein the processing unit (40; 40'; 40"') is adapted for the exclusive output of amounts in the currency which can be selected by the associated first selection element (14, 16; 14', 16'; 14", 16") in the respective display line (28, 30; 28', 30'; 28", 30").

12. A device according to one of the preceding claims **characterised in that** the processing unit (40; 40'; 40"') is adapted for currency conversion input step by input step and for the output of the result of conversion input step by input step in the associated display line (28, 30; 28', 30'; 28", 30").

13. A device according to one of the preceding claims **characterised in that** the processing unit (40; 40'; 40"') is adapted for the substantially simultaneous output of the amount converted into the other currency upon input of an amount in the one currency.

14. A device according to one of the preceding claims **characterised in that** the processing unit (40; 40'; 40"') is adapted for the substantially simultaneous output of the calculation result in both currencies when accounting for second amounts in different or the same currency.

15. A device according to one of the preceding claims **characterised in that** the processing unit (40; 40'; 40"') is adapted to convert between the first currency and a number of second currencies, wherein there is provided a currency selection element connected to the processing unit (40; 40'; 40"') for selection of the second currency.

16. A device according to one of the preceding claims **characterised in that** it is in the form of a cash register with an output unit (53) which can be turned towards a customer and an output unit (52) which can be turned towards a salesperson.

## Revendications

1. Dispositif servant à convertir une somme d'une première monnaie en une seconde monnaie ou vice-versa, comportant une unité d'entrée (12; 12'; 12"'), une unité de traitement (40; 40'; 40"') relié e à celle-ci, une unité de sortie (41; 41') reliée à l'unité de traitement (40; 40'; 40'"), et avec au moins un premier élément de sélection (14, 16; 14', 16'; 14", 16") relié à l'unité de traitement (40; 40'; 40"') servant à déterminer une monnaie d'entrée, l'unité de traitement (40; 40'; 40"') étant constituée de manière à être capable d'effectuer la conversion d'une somme entrée d'une monnaie, à effectuer des opérations élémentaires de l'arithmétique sur les sommes entrées et à commander la sortie par l'unité de sortie (41; 41'), l'unité de sortie (41; 41') présentant au moins un premier secteur de sortie (42; 42'; 42'") avec deux lignes d'affichage de sortie (28, 30; 28', 30'; 28", 30") permettant la sortie pratiquement simultanée d'un montant entré et d'un montant converti, **caractérisé en ce que** l'unité de traitement (40; 40'; 40"') est constituée de sorte à être capable d'effectuer au choix les opérations élémentaires de l'arithmétique sur des monnaies différentes et **en ce qu'**il est prévu une fonction de rendu monnaie pour assurer, dans un premier pas fonctionnel, l'entrée d'un montant facturé, dans un second pas fonctionnel, l'entrée d'un montant payé, et enfin, dans un troisième pas fonctionnel, la sortie de la différence entre le montant facturé et le montant payé, constituant le montant à rendre, dans les deux monnaies, sur le premier secteur de sortie (42'; 42"'), au moins un second élément de sélection (48.1, 48.2, 48.3; 48.4) étant prévu relié à l'unité de traitement (40'; 40'") pour choisir librement le pas fonctionnel.

2. Dispositif selon l'une des revendications 1, **caractérisé en ce que** l'unité de sortie (41') comprend un champ de sortie (49; 28.1", 30.1") permettant la sortie d'une information caractérisant le dernier pas fonctionnel choisi.

3. Dispositif selon la revendication 2, **caractérisé en ce que** le champ de sortie (49; 28.1", 30.1") est associé au premier secteur de sortie (42').

4. Dispositif selon la revendication 1, **caractérisé en ce que** l'unité de sortie comprend un second secteur de sortie (56) comportant deux lignes d'affichage de sortie, servant à sortir le montant facturé, ainsi qu'un troisième secteur de sortie (57) comportant deux lignes d'affichage de sortie, servant à sortir le montant payé.

5. Dispositif selon la revendication 4, **caractérisé en ce qu'**il est associé à chacun des secteurs de sortie (42"', 56, 57) une identification correspondant aux pas fonctionnels appartenant aux dits secteurs de sortie.

6. Dispositif selon l'une des revendications 4 ou 5, **caractérisé en ce que** les six lignes de sortie (281, 282, 283, 301, 302, 303) sont disposées de telle manière en forme de matrice constituée de lignes et de colonnes, qu'une première ligne de la matrice constitue le second secteur de sortie (56""), qu'une seconde ligne de la matrice constitue le troisième secteur de sortie (57"") et qu'une troisième ligne de la matrice est attribuée au premier secteur de sortie (42""), les lignes de sortie (281, 282, 283) d'une première colonne de la matrice étant attribuées à une première monnaie et les lignes de sortie (301, 302, 303), réservées à la seconde monnaie, étant attribuées à la deuxième colonne de la matrice.

7. Dispositif selon la revendication 6, **caractérisé en ce que** chacun des premiers éléments de sélection (14"", 16"") est attribué à une colonne de la matrice, ces éléments étant placés au dessus ou en dessous des lignes d'affichage correspondantes, les seconds éléments de sélection (48.1"", 48.2"", 48.3"") étant chacun attribués à une ligne de la matrice et étant placés à gauche ou à droite du secteur de sortie correspondant (56"", 57"", 42"").

8. Dispositif selon la revendication 5, **caractérisé en ce que** chacun des seconds éléments de sélection (48.1"", 48.2"", 48.3"") est placé au voisinage immédiat du second, troisième et premier secteur de sortie (56"", 57"", 42""), auquel il est attribué.

9. Dispositif selon l'une des revendications 1 à 8, **caractérisé en ce que** l'unité de traitement (40'; 40"') est constituée de manière à être en mesure d'effectuer les opérations élémentaires de l'arithmétique, et en particulier à effectuer de manière supplémentaire et au choix les opérations élémentaires de l'arithmétique avec des monnaies différentes, au moins au cours du premier pas fonctionnel.

10. Dispositif selon l'une des revendications précédentes, **caractérisé en ce que** les constantes nécessaires aux conversions monétaires sont mémorisées en tant que valeur fixe dans une mémoire (47; 47'; 47'") reliée à l'unité de traitement (40; 40'; 40"').

11. Dispositif selon l'une des revendications précédentes, **caractérisé en ce qu'**il est prévu deux premiers éléments de sélection (14, 16; 14', 16', 14", 16") et que chaque premier élément de sélection (14, 16; 14', 16', 14", 16") est associé à une unité d'affichage (28, 30; 28', 30'; 28", 30"), l'unité de traitement (40; 40'; 40"') étant constituée de manière a ne sortir que des montants dans la monnaie pouvant être choisie par le premier élément de sélection (14,16; 14', 16', 14", 16"), et ce dans la ligne d'affichage (28, 30; 28', 30'; 28", 30") correspondante.

12. Dispositif selon l'une des revendications précédentes, **caractérisé en ce que** l'unité de traitement (40; 40'; 40"') est constituée de manière à assurer la conversion des monnaies d'un pas d'entrée à l'autre et à sortir les résultats de cette conversion, également d'un pas d'entrée à l'autre, dans la ligne d'affichage qui lui est attribuée (28, 30; 28', 30'; 28", 30").

13. Dispositif selon l'une des revendications précédentes, **caractérisé en ce que** l'unité de traitement (40; 40'; 40"') est constituée de manière à assurer essentiellement la sortie simultanée du montant converti à l'autre monnaie lors de l'entrée d'un montant en une monnaie.

14. Dispositif selon l'une des revendications précédentes, **caractérisé en ce que** l'unité de traitement (40; 40'; 40"') est constituée de manière à assurer essentiellement la sortie simultanée du résultat de la conversion dans les deux monnaies lors de la mise en compte de deux montants dans la même monnaie ou dans monnaies différentes.

15. Dispositif selon l'une des revendications précédentes, **caractérisé en ce que** l'unité de traitement (40; 40'; 40"') est constituée de manière à assurer la conversion de la première monnaie en un certain nombre de secondes monnaies, un élément de sélection des monnaies relié à l'unité de traitement (40; 40'; 40"') assurant la sélection de la seconde monnaie.

16. Dispositif selon l'une des revendications précédentes, **caractérisé en ce qu'**il est constitué en caisse enregistreuse, présentant une unité de sortie (53) tournée vers le client et une unité de sortie (52) tournée vers le vendeur.
